# EUROPEAN PATENT SPECIFICATION

(11) **EP 1 966 880 B1**
(45) Date of publication and mention of the grant of the patent: **29.06.2011**
(21) Application number: 06841397.0
(22) Date of filing: 18.12.2006
(51) Int. Cl.: H02P 1/44

(54) **A MOTOR**
MOTOR
MOTEUR

(30) Priority: 29.12.2005 TR 200505323
(43) Date of publication of application: 10.09.2008
(73) Proprietor: Arçelik Anonim Sirketi, 34950 Istanbul (TR)
(72) Inventor: PARMAKSIZ, Sezgin, 34950 Istanbul (TR); YUKSEL, Mustafa, 34950 Istanbul (TR); DIRIL, Orhan, 34950 Istanbul (TR); COSAN, Ahmet Ferit, 34950 Istanbul (TR)
(86) International application number: PCT/EP2006/069802
(87) International publication number: WO 2007/074092

(56) References cited:
- EP-A- 1 494 346
- WO-A-2005/034330
- WO-A-2005/046042
- US-A- 3 544 869
- US-A- 3 643 142

## Description

This invention relates to a motor with an improved startup performance.

In state-of-the-art motor embodiments, the switching elements called thermic protectors switching to cut off state in case of high current and/or high temperature conditions and protecting the motor by cutting the mains voltage are used.

In state-of-the-art European Patent Application no. EP1569325, a description is given of a motor protected against high current and high temperature by a thermic protector. In the invention which is the object of this document, triac is used instead of PTC, and thus, since the triacs are not driven by a microprocessor, as the thermic protector switches to off state triacs can not be driven. When the thermic protector switches to on state both triacs are ignited in certain intervals and the startup of the motor is provided.

In the state of the art, an international patent application W02005046042 discloses a protecting device for an electric motor comprising at least one thermal switch operatively and electrically connecting the power source to the power switches and being thermally coupled to the latter, in order to detect the temperature in said power switches and interrupt the current to the latter when the temperature in any of said power switches reaches a determined value which is predefined and higher than a respective predetermined value for the maximum operating temperature of the power switches.

Another prior art document, United States patent application US3643142, discloses a control system for an electrical motor having a run winding and a start winding. The system includes a thermal protection means coupled to the motor in order to disrupt the flow of current to the run winding in response to a sensed motor temperature in excess of a preselected temperature level.

In European patent application EP1494346, a controller device for induction motors or compressors in refrigerating apparatus is disclosed which comprises a controller and switching means interlocked with the controller and active on a starting winding and a running winding of a compressor; the controller comprises a processing unit calculating a main parameter depending on a characteristic magnitude of the compressor detected by a detecting block, comparing the main parameter with a value contained in a memory and generating a control signal.

Another prior art document, United States Patent No. US3544869 discloses a control for an electric motor and more particularly to such a control for deenergizing the auxiliary winding of a motor after a predetermined delay following energization of the motor.

In International Patent Application No. W02005034330, a starting device and starting method for a single-phase induction motor is disclosed.

In a motor which is controlled by a controlling unit with a microprocessor and protected against high current and temperature by a thermic protector, both of the triacs connected to the primary winding and the secondary winding are ignited at the same time and the startup of the motor is provided. As the motor startup is provided, the continuous operation triac continues to be driven to keep the motor operation but the starter triac used only for the motor startup is turned off. When the thermic protecter switches to cut off state, the motor stops but the continuous operation triac continues to be driven. When the temperature of the thermic protector drops and it switches to on state, even the continuous operation triac runs, the starter triac can not be ignited as the microprocessor does not have any information about the state of the thermic protector. In this case, the motor startup does not occur since the starter triac is not ignited when the thermic protector switches from off state to on state.

The objective of the present invention is the realization of a motor the startup of which is provided by switching-on the starter triac according to the state of the thermic protector.

The motor realized in order to fulfill the objectives of this invention and explicated in the first claim and depending claims thereof comprises a thermic protector which protects the motor by switching to the cut off state in case of high temperatures and high currents, a motor driving circuit having power elements to provide the motor start and motor stop, and a control unit providing the control of the motor driving circuit by a microprocessor. The control unit provides the evaluation of the voltage values on the resistors connected to the common terminal of the motor or the motor driving circuit by the microprocessor, and easy startup of the motor by controlling whether the thermic protector is in on or off state in order to ignite the starter triac according to this evaluation. Thus it is provided to detect whether the motor is energised or de-energised wherein the thermic protector switches to on/off states in case of high temperature or high electric current.

In an embodiment of the present invention, whether the thermic protector is in on or off states is detected by measuring the current on the resistor connected to the terminal of the continuous operation triac and accordingly, the motor is started by providing the ignition of the starter triac.

In another embodiment of the present invention, the off state of the thermic protector is detected by measuring the voltage on the terminals of the continuous operation triac, and accordingly the motor is started by providing the ignition of the starter triac.

In another embodiment of the invention, the off state of the thermic protector is detected by measuring the voltage on the common terminal of the motor, and accordingly the motor is started by providing the ignition of the starter triac.

The motor realized in order to fulfill the objectives of this invention is illustrated in the attached figures, where :
Figure 1 - Is the schematic view of a motor, a motor driving circuit, a control unit and a voltage/current measurement circuit.
Figure 2 - Is the schematic view of a motor, a motor driving circuit, a control unit and a voltage/current measurement circuit in another embodiment of the invention.
Figure 3 - Is the view of a motor, a motor driving circuit, a control unit and a voltage/current measurement circuit in another embodiment of the invention.

Elements shown in figures are numbered as follows :
1. Motor
2. Motor driving circuit
3. Control unit
4. Thermic protector
5. Power supply
6. 16. Triac
7. Current/Voltage measurement circuit

The motor (1) of the present invention is driven by a power supply (5). The motor (1) comprises a main winding (MW), an auxiliary winding (AW), a common terminal (C) where one terminals of these windings (MW and AW) are connected to each other, a thermic protector (4) positioned between the common terminal (C) and the power supply (5), cutting off the mains voltage by switching to the off state in case of high electric current and/or high temperature, and a motor driving circuit (2) connected to the main and auxiliary windings (MW and AW) providing to start or stop the motor (1).

The motor driving circuit (2) comprises a starter triac (16) connected to the auxiliary winding (AW) in series, triggered for a while during the startup to provide the running of the motor (1), switched off after the motor (1) start, and a continuous operation triac (6) connected to the main winding (MW) in series, providing the controlled starting or stopping of the motor (1) even when the starter triac (16) is switched off, driven when the thermic protector (4) is switched to the off state.

The motor (1) comprises one or ore voltage/current measurement circuits (7) one ends of which are connected to the control unit (3), the other to the motor driving circuit (2) or the common terminal (C) of the motor (1) and a control unit (3) which provides the motor (1) start by triggering the continuous operation triac (6) together with the starter triac (16) when it is detected that the thermic protector (4) is switched to the on state due to an increase in voltage or current of the voltage/current measurement circuit (7) so as to determine the state of the thermic protector (4). Thus, it is provided to control the starter triac (16) by detecting the state of the thermic protector (4) and to obtain the needed start torque for the motor (1) start.

In this embodiment, one terminal (T2) of the continuous operation triac (6) is connected to the main winding (MW), the other terminal (T1) to a terminal (T1) of the starter triac (16), and the gate terminal (G2) is connected to the control unit (3) via a resistance (R2). One terminal (T2) of the starter triac (16) is connected to the auxiliary winding (AW) as the other terminal (T1) is connected to the other terminal (T2) of the continuous operation triac (6) and the gate terminal (G1) is connected to the control unit (3) via a resistance (R1). Those resistances (R1 and R2) connected to the control unit (3) are used to limit the electric currents on the gate terminals (G1 and G2) of each triacs (TR1 and TR2). There is a voltage/current measurement circuit (7) between the control unit (3) and the motor (1) or the motor driving circuit (2) in order to detect the state of the thermic protector (4). The control unit (3) drives the starter and the continuous operation triacs (16 and 6) and the motor (1) is controlled by switching on/off by means of the continuous operation triac (6). After the motor (1) is supplied with the mains voltage, the starter and the continuous operation triacs (16 and 6) are switched-on and the starter triac (16) is driven during a period needed for the motor (1) start, and thus, current passes through the main winding (MW) and the auxiliary winding (AW). The motor (1) starts rotating as a result of the torque created on the motor (1) by the current passing through the auxiliary winding (AW). The starter triac (16) is not driven from that time on. Thus, the unnecessary power consumption after the motor (1) startup is prevented.

In this embodiment, if the thermic protector (4) switches-off for any reason, the motor (1) can not be fed by the mains energy and stops. In this case, the voltage/current measurement circuit (7) reads "no voltage". When the operating conditions are maintained, the thermic protector (4) switches-on to provide the motor (1) to be fed by the mains voltage. In this case, the voltage/current measurement circuit (7) reads a certain voltage. This voltage data is evaluated by the control unit (3) and it is decided that the thermic protector (4) is on, and the starter triac (16) is triggered by the control unit (3). At this moment, as the continuous operation triac (6) is already on, a healthy startup of the motor (1) is provided by driving both triacs (6 and 16). The starter triac (16) is driven for a certain time period and then switched-off to provide the normal operation of the motor (1).

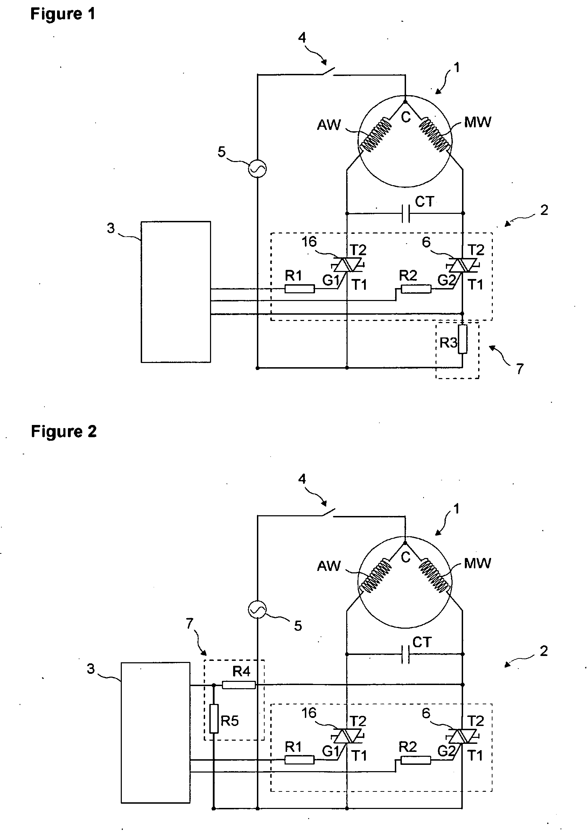

In an embodiment of the present invention, the voltage/current measurement circuit (7) comprises a resistance (R3) placed between the terminal (T1) of the continuous operation triac (6) and the power supply (5), having a connection with the point connecting the T1 terminal and the control unit (3) so as to enable the control unit (3) to evaluate the current passing through it (Figure 1).

In another embodiment of the present invention, the voltage/current measurement circuit (7) is a voltage divider which is comprised of two resistances (R4 and R5) connected in series. In this embodiment, the terminal of one (R4) of the resistances is connected to the terminal (T2) of the continuous operation triac (6), and the end of the other resistance (R5) is to the line where the power supply (5) and the triacs (6 and 16) are connected. The point where both the resistances (R4 and R5) are connected to each other is connected to the control unit (3). Thus, the voltage on the continuous operation triac (6) is decreased by the voltage divider and evaluated by the control unit (3) to decide whether the thermic protector (4) is switched to the off state or not (Figure 2).

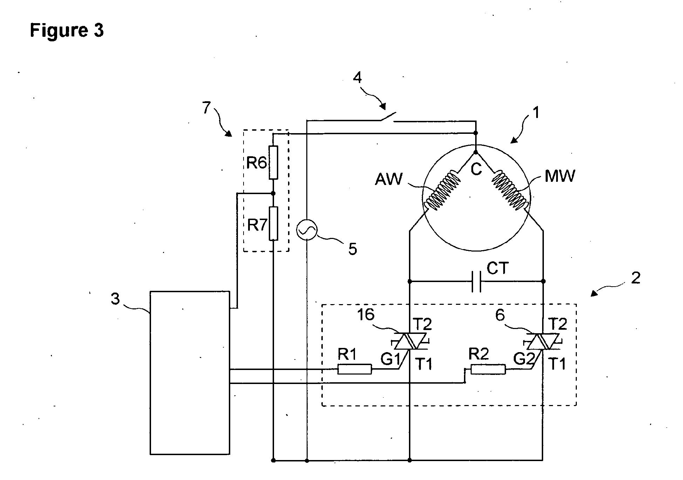

In another embodiment of the present invention, similar to the above embodiment, a voltage divider which is comprised of two resistances (R6 and R7) in series are used as the voltage/current measurement circuit (7). In this embodiment, the voltage divider is placed between the common terminal (C) of the motor (1) and the line connecting the power supply (5) and the triacs (6 and 16). The point where both of the resistances (R6 and R7) are connected to each other is connected to the control unit (3). The voltage between this circuit (7) and the common terminal (C) of the motor (1) is decreased by the voltage divider and evaluated by the control unit (3) to decide whether the thermic protector (4) is switched to the off state or not (Figure 3).

The motor (1) is fed by an alternating current power supply (5), and preferably used in the compressors of the cooling systems.

In yet another embodiment of the present invention, there is a capacitor (CT) which increases the motor (1) efficiency between the main winding and the auxiliary winding (MW and AW).

In all of the embodiments of the present invention, in the voltage/current measurement circuit (7), sensors which can measure electric current or voltage can be used instead of the resistances (R3, R4, R5, R6, and R7) used.

By this invention, for a motor (1) comprising a control unit (3) and a thermic protector (4) which protects the motor (1) from high temperature and current, by transferring the data including the state of the thermic protector (4) to the control unit (3) and by igniting the triacs (6 and 16) according to the state of the thermic protector (4), the motor (1) is provided to start without the need for additional circuit elements.

## Claims

1. A motor (1) comprising
• a main winding (MW),
• an auxiliary winding (AW),
• a common terminal (C) where one of the terminals of these two windings (MW and AW) are connected to each other,
• a thermic protector (4) positioned between this common terminal (C) and a power supply (5), disconnecting the common terminal (C) from the power supply (5) by switching to the off state in case of high temperature and/or high current,
• a motor driving circuit (2) having
o a starter triac (16) which is connected in series with the auxiliary winding (AW), providing the startup of the motor (1) by being triggered during the motor (1) start for a certain period of time at startup, being switched-off after the motor (1) starts operating, and
o a continuous operation triac (6) which is connected with the main winding (MW) in series, which is continued to be driveneven after the starter triac (16) is switched-off and after the thermic protector (4) is in switched-off state,
• a control unit (3) which provides the controlling of the motor driving circuit (2) and **characterized by**
• a voltage/current measurement circuit (7) having one of its terminals connected to the control unit (3), the other terminal being connected to the motor driving circuit (2) or to the common terminal (C) so as to transfer the data including the state of the thermic protector (4) switching from the off state to the on state to the control unit (3),
• the control unit (3) determining that the thermic protector (4) is switched to the on state according to the increase in the current or the voltage on the voltage/current measurement circuit (7) and
• providing the realization of the motor (1) start by triggering the starter triac (16) together with the continuous operation triac (6) when the control unit (3) determines that the thermic protector (4) has switched back to the on state.

2. A motor (1) as in Claim 1, **characterized by** a voltage/current measurement circuit (7) placed between the terminal (T1) of the continuous operation triac (6) and the power supply (5), comprising at least one resistance (R3) connected to the control unit (3) from the point where it is connected to the T1 terminal so that the current passing through it can be evaluated.

3. A motor (1) as in Claim 1 **characterized by** a voltage/current measurement circuit (7) comprising at least two resistances (R4 and R5) connected to each other in series wherein terminal of one of the resistances (R4) is connected to the terminal (T2) of the continuous operation triac (6) as the terminal of the other resistance (R5) is connected to the line connecting the power supply (5) and the triacs (6 and 16).

4. A motor (1) as in Claim 1, **characterized by** a voltage/current measurement circuit (7) comprising at least two resistances (R6 and R7) connected to each other in series, placed between the common terminal (C) and the power supply (5) or the line connecting the triacs (6 and 16) and connected to the control unit (3) from the point where they are connected to each other.

## Patentansprüche

1. Motor (1), umfassend:
• eine Hauptwicklung (MW)
• eine Hilfswicklung (AW),
• eine gemeinsame Klemme (C), wobei jeweils eine der Klemmen der zwei Wicklungen (MW und AW) miteinander verbunden sind,
• eine Wärmeschutzeinrichtung (4), die zwischen der gemeinsamen Klemme (C) und einer Stromversorgung (5) angeordnet ist und die gemeinsame Klemme (C) von der Stromversorgung (5) trennt, indem sie sie im Fall einer hohen Temperatur und/oder eines hohen Stroms ausschaltet,
• einen Motorantriebsschaltkreis (2), aufweisend
o einen Anlasser-Triac (16), der in Serie mit der Hilfswicklung (AW) verbunden ist und das Starten des Motors (1) ermöglicht, indem er während des Starts des Motors (1) über einen bestimmten Zeitraum beim Starten ausgelöst wird und ausgeschaltet wird, wenn der Motor (1) seinen Betrieb aufgenommen hat, und
o einen kontinuierlich arbeitenden Triac (6), der in Serie mit der Hauptwicklung (MW) verbunden ist, und der auch dann weiter angesteuert wird, wenn der Anlasser-Triac (16) ausgeschaltet wurde und wenn sich die Wärmeschutzeinrichtung (4) im ausgeschalteten Zustand befindet,
• eine Steuereinheit (3), die das Steuern des Motorantriebsschaltkreises (2) ermöglicht, und **gekennzeichnet durch**
• einen Spannungs-/Strommessschaltkreis (7), dessen eine Klemme mit der Steuereinheit (3) verbunden ist, und dessen andere Klemme mit dem Motorantriebsschaltkreis (2) oder der gemeinsamen Klemme (C) verbunden ist, um auf diese Weise Daten einschließlich des Zustands der Wärmeschutzeinrichtung (4, die sich aus dem Aus-Zustand in den Ein-Zustand umschaltet, an die Steuereinheit (3) zu übertragen,
• die Steuereinheit (3), die anhand des Anstiegs des Stroms oder der Spannung im Spannungs-/Strommessschaltkreis (7) bestimmt, dass die Wärmeschutzeinrichtung (4) in den Ein-Zustand geschaltet wurde, und
• Ermöglichen des Starts des Motors (1), indem der Anlasser-Triac (16) zusammen mit dem kontinuierlich arbeitenden Triac (6) ausgelöst wird, wenn die Steuereinheit (3) bestimmt, dass die Wärmeschutzeinrichtung (4) sich zurück in den Ein-Zustand geschaltet hat.

2. Motor (1) nach Anspruch 1, **gekennzeichnet durch** einen Spannungs-/Strommessschaltkreis (7), der zwischen der Klemme (T1) des kontinuierlich arbeitenden Triac (6) und der Stromversorgung (5) angeordnet ist, umfassend wenigstens einen Widerstand (R3), der ab dem Punkt, an dem er mit der Klemme (T1) verbunden wird, mit der Steuereinheit (3) verbunden wird, derart, dass der **dadurch** fließende Strom ausgewertet werden kann.

3. Motor (1) nach Anspruch 1, **gekennzeichnet durch** einen Spannungs-/Strommessschaltkreis (7), der wenigstens zwei Widerstände (R4 und R5) umfasst, die in Serie miteinander verbunden sind, wobei die Klemme eines der Widerstände (R4) mit der Klemme (T2) des kontinuierlich arbeitenden Triac (6) verbunden wird, wenn die Klemme des anderen Widerstands (R5) mit der Leitung verbunden wird, die die Stromversorgung (5) und die Triacs (6 und 16) verbindet.

4. Motor (1) nach Anspruch 1, **gekennzeichnet durch** einen Spannungs-/Strommessschaltkreis (7), der mindestens zwei in Serie miteinander verbundene Widerstände (R6 und R7) aufweist und zwischen der gemeinsamen Klemme (C) und der Stromversorgung (5) oder der Leitung, die die Triacs (6 und 16) verbindet, angeordnet ist, und der ab dem Punkt, an dem diese miteinander verbunden werden, mit der Steuereinheit (3) verbunden wird.

## Revendications

1. Un moteur (1) comprenant :
• un enroulement primaire (MW),
• un enroulement secondaire (AW),
• une borne commune (C) où l'une des bornes de ces deux enroulements (MW et AW) sont reliées les unes les autres,
• un protecteur thermique (4) disposé entre cette borne commune (C) et une source d'alimentation (5), détachant la borne commune (C) de la source d'alimentation (5) en passant à l'état au repos en cas de température élevée et/ou courant élevé.
• un circuit de commande moteur (2) ayant
o un triac de démarrage (16) qui est relié en série à l'enroulement secondaire (AW), permettant le démarrage du moteur (1) en étant déclenché pendant le démarrage du moteur (1) pour une certaine période de temps au démarrage, étant éteint après que le moteur (1) démarre, et
o un triac à marche continue (6) qui est relié à l'enroulement primaire (MW) en série, qui est continué d'être alimenté, même après que le triac de démarrage (16) est éteint et après que le protecteur thermique (4) est en état au repos.
• une unité de contrôle (3) qui permet le contrôle du circuit de commande moteur (2) et **caractérisé par**
• un circuit de mesure de tension/courant (7) dont une borne est reliée à l'unité de contrôle (3), et l'autre borne est relié au circuit de commande moteur (2) ou à la borne commune (C) de manière à transmettre les données contenant l'état du protecteur thermique (4) passant de l'état au repos à l'état passant à l'unité de contrôle (3).
• l"unité de contrôle (3) qui détermine que le protecteur thermiuque (4) est passé à l'état passant d'après l'augmentation du courant ou la tension sur le circuit de mesure de tension/courant (7) et
• permettant la réalisation du démarrage du moteur (1) en déclenchant le triac de démarrage (16) avec le triac à marche continue (6) lorsque l'unité de contrôle (3) détermine que le protecteur thermique (4) est ramené à l'état passant.

2. Un moteur (1) selon la Revendication 1, **caractérisé par** un circuit de mesure de tension/courant (7) placé entre la borne (T1) du triac à marche continue (6) et la source d'alimentation (5), comprenant au moins une résistance (R3) reliée à l'unité de contrôle (3) au point où elle est reliée à la borne (T1) de telle sorte que le courant qui la traverse peut être évalué.

3. Un moteur (1) selon la Revendication 1, **caractérisé par** un circuit de mesure de tension/courant (7) comprenant au moins deux résistances (R4 et R5) reliées les unes aux autres en série au point où la borne de l'une des résistances (R4) est reliée à la borne (T2) du triac à marche continue (6) tandis que la borne de l'autre résistance (R5) est reliée à la ligne reliant la source d'alimentation (5) et les triacs (6 et 16).

4. Un moteur (1) selon la Revendication 1, **caractérisée par** un circuit de mesure de tension/courant (7) comprenant au moins deux résistances (R6 et R7) reliées les unes aux autres en série, placées entre la borne commune (C) et la source d'alimentation (5) ou à la ligne reliant les triacs (6 et 16) et reliées à l'unité de contrôle (3) au point où elles sont reliées les unes aux autres.
